# EUROPEAN PATENT SPECIFICATION

(11) **EP 2 364 886 B1**
(45) Date of publication and mention of the grant of the patent: **24.05.2017**
(21) Application number: 11382036.9
(22) Date of filing: 11.02.2011
(51) Int. Cl.: B60R 21/38

(54) **Vehicle safety system for protecting a pedestrian in case of impact**
Sicherheitssystem, das auf Automobile zum Schutz eines Fußgängers im Fall des Zusammenstoßes mit diesem anwendbar ist
Système de sécurité s'appliquant à des automobiles pour la protection d'un piéton en cas de choc

(30) Priority: 08.03.2010 ES 201030337
(43) Date of publication of application: 14.09.2011
(73) Proprietor: Flexngate Automotive Iberica, S.A., 08520 Les Franqueses Del Valles (ES)
(72) Inventor: Agell Merino, Aitor, E-08221, TERRASSA (ES); Cano Sainz, Alberto, E-08810, SANT PERE DE RIBES (ES); Sells Hidalgo, Miguel Angel, E-08014, BARCELONA (ES)
(74) Representative: Sugrañes Patentes y Marcas

(56) References cited:
- DE-A1-102005 007 903

## Description

### Technical Field of the Invention

The object of the present invention is a device for the displacement of the articulated attachment between a hinge of a hood of an automotive vehicle and said hood in the event of someone being hit, which allows displacing the hood to a position in which the force of the impact of the pedestrian against the vehicle is reduced.

### Background of the Invention

When someone is hit, an automotive vehicle frontally colliding against a pedestrian, the pedestrian's head tends to impact against the rear part of the hood of the vehicle, i.e., that part closest to the front windshield, causing considerable injuries in the pedestrian if the hood is solidly fixed to the chassis of the vehicle at a level immediately above non-deformable parts of the motor.

To solve this drawback, devices such as the one disclosed in DE10128967, which allow raising and displacing the rear part of the hood of the vehicle towards the windshield when it detects that someone has been hit, the rear part of the hood being connected in an articulated manner to the chassis but with certain allowance, which enables absorbing part of the impact of the pedestrian's head, are known.

Devices such as the one described in DE102007040126, using single-use pyrotechnic actuators for the instantaneous displacement of the rear part of the hood when it detects that someone has been hit, so that the hood is raised before the pedestrian's head impacts against it, are also known.

A first object of the present invention is to disclose an alternative to known devices which, in addition to the known performance, prevents the displacement of the hood towards the windshield in the event of a collision not caused by hitting someone, i.e. in cases in which the pyrotechnic actuator does not come into play. A secondary objective of the invention is a device provided with means suitable for being able to fix the hood to the chassis of the vehicle again without the need for tools, at least sufficiently for driving to a specialized mechanic's shop. Indeed, in the known devices, after hitting someone, the hood is raised, blocking the driver's view and preventing driving the vehicle safely to a technical service point. A device which allows rapidly and safely fixing the hood after hitting someone is therefore also desirable, being able to easily adopt a position in which it is possible to drive to a technical service point, excessive vibrations or involuntary displacements of the hood being prevented.

Patent document FR2928115 describes a device having a toothed piston which emerges from its housing upon being actuated by a pyrotechnic actuator when someone is hit and allows absorbing the impact of the pedestrian's head by means of friction against partially elastic ribs which must go through the teeth of the piston. Nevertheless, after the actuation of the toothed piston, either because someone has been hit or due to the device malfunctioning, it is possible by exerting pressure on the hood that the initial position of the piston can be restored without realizing that the device will not work correctly when hitting someone in the future because the pyrotechnic actuator was not replaced. To solve this drawback, the restoration of the initial position of the piston can be prevented intentionally or not by increasing the force necessary to return the piston to the initial position, but this would mean that the impact against the pedestrian's head when he is hit would be greater. A device which allows the hood to remain connected in an articulated manner to the chassis after hitting someone but without being able to restore its initial position after the pyrotechnic actuator is triggered, allowing the user to be able to safely drive the vehicle and visually detect in a simple manner that it is necessary to go to the technical service point to replace the pyrotechnic actuator and restore the initial position of the device, so that it can be fully operative again is therefore also desirable.

Document DE 102005007903 describes a device that comprises a stroke member, connected to the hinge of the hood, the movement of which is blocked by a stopper in the form of a hook. The device comprises an actuation lever that performs as a cam, displaceable by a pyrotechnic actuator and able to displace the hook in order to release the movement of the stroke member in a direction that raises the hinge of the hood. The device according to the invention is defined in claim 1. Advantageously, the device allows the hinge of the hood to be able to be assembled on the second movable part and built into the second movable part, so the device of the invention can be used for different types of hinges of a hood, according to the necessary features.

Another advantage of the device is that, since the displacement of the articulated attachment with the hood in the retreat direction is blocked, the ill-intentioned displacement of the rear part of the hood upwards is prevented by means of a lever or the like for the purpose of accessing parts which could be manipulated in order to, for example, open the doors of the vehicle, and which are located under the hood. According to the invention, the displacement of the articulated attachment with the hood is blocked by contact of the first lever with the second lever, when the latter adopts the retaining position. In other words, the second lever acts like a natural stop, preventing the rotation of the first lever in the direction transmitting the displacement of the articulated attachment with the hood to the movable part.

According to another feature of the invention, the mutual contact surfaces between the first and second levers are suitably oriented so that in the retaining position, the rotational movement of the first lever in the direction transmitting the retreat movement to the articulated attachment with the hood, is mechanically jammed by the second lever, without the contribution of the pyrotechnic actuator by means of its connection with the second lever to prevent the rotation of said second lever being necessary. This orientation is especially advantageous so that, in the event that an unwanted force is exerted on the hood in the retreat direction, for example as a consequence of a collision against an obstacle which is not a pedestrian, the first lever, and hence the hood, are not displaced in said retreat direction.

In order for the resultant vector of the force that the first lever can apply on the second lever when the latter adopts the retaining position to urge said second lever to rotate in the direction opposite to that of the displacement of the hood in the retreat direction, in a variant of interest the contact surface of the second lever comprises a tooth with a contour having a retainer sector the slope or tangent of which forms, in the rotational direction of the second lever, an angle less than 100°, and is preferably 90°, with the imaginary line joining the fulcrum of said second lever with said retainer sector.

In the event that said angle is 90°, the force exerted by the first lever on the second lever will be normal to the retainer sector and will be directed towards the fulcrum of the second lever, and therefore will not cause the rotation of said second lever.

For angles slightly greater than 100°, although the force exerted by the first lever on the second lever would ideally urge the rotation of said second lever, it is observed that due to the friction between the first and second levers, there may be a certain margin of angles in which said friction is enough to prevent the rotation of said second lever.

According to another feature of the invention, the second part comprises a pin, separated a distance from the resistance of the second lever in the retaining position, suitable for receiving and transmitting the pushing action of said second lever during its second actuation phase to the second part. Advantageously, when the pyrotechnic actuator is actuated, all the force that the latter transmits during the first actuation phase is intended for disconnecting the levers and for releasing the first lever, while once the latter is released, and during the second actuation phase, the force transmitted by the pyrotechnic actuator is used in the displacement of the second part.

In a variant of interest, the second lever is a class three lever, in which the power formed by the connecting point with the pyrotechnic actuator is located between the resistance and the fulcrum, the resistance being the part of the second lever which displaces the second movable part by pushing. This arrangement is of particular interest because the pyrotechnic actuator is assembled between the first and the second levers and the force exerted by the pyrotechnic actuator is mostly in the component necessary for separating the first and the second levers and pushing the second movable part. In any case, other less efficient though equally valid solutions could be achieved if the second lever was a first or second class lever, and even with other arrangements of the pyrotechnic actuator, for example fixing its fixed end to the first fixed part and its movable end to the power of the second lever.

According to another feature of the invention, the contour of the contact surface of the first lever comprises a double step determining two adjacent recesses, the first recess of which receives the snap fitting of the tooth of the second lever in the initial retaining position of the device, while the second recess is suitable for receiving by snapping the same tooth in a provisional retaining position which can be reached after the activation of the pyrotechnic actuator, when the first and second levers are manually displaced in the direction opposite to the actuation direction of the device in the event of someone being hit.

This feature means that a stop element to prevent the rotation of the second lever in the direction opposite to its actuation direction is not necessary, and it further makes it possible for the device to adopt a provisional retaining position after someone has been hit in which the hood is sufficiently retained so that the driver can drive to the technical service point.

According to another feature of the invention, the device comprises a third lever which connects the first fixed part with the second movable part and which contributes in guiding the movement of the second movable part.

In a variant of interest, the device comprises pre-tensing means intended for being able to graduate in the retaining position the threshold value of the force necessary for releasing the tooth of the second lever from the first recess of the first lever by means of a variation of the elastic deformation of the components of the device connected with said first and second levers. The pre-tensing means contribute to the first and second levers being sufficiently retained by snapping when the second lever adopts the retaining position, preventing them from being able to be manually separated and, accordingly, preventing the hood from being displaced in unwanted situations, for example when the vehicle is subjected to vibrations upon driving over rough terrain.

### Brief Description of the Drawings

The attached drawings illustrate by way of non-limiting example different embodiment variants of the invention. In said drawings,
Figure 1 shows a device according to the invention in which the first lever adopts the retaining position;
Figure 2 is a detailed view of a part of the device shown in Figure 1, and specifically of the mutual contact surfaces between the first and second levers;
Figures 3 to 5 depict the sequence of movements of the components of the device once the pyrotechnic actuator has been triggered;
Figure 6 shows the same device in the provisional retaining position;
Figure 7 shows a second embodiment variant of the device according to the invention;
Figure 8 shows the device of Figure 7, unblocked in this case;
Figure 9 shows a third embodiment variant of the device according to the invention; and
Figure 10 shows the device of Figure 9, unblocked in this case.

### Detailed Description of the Drawings

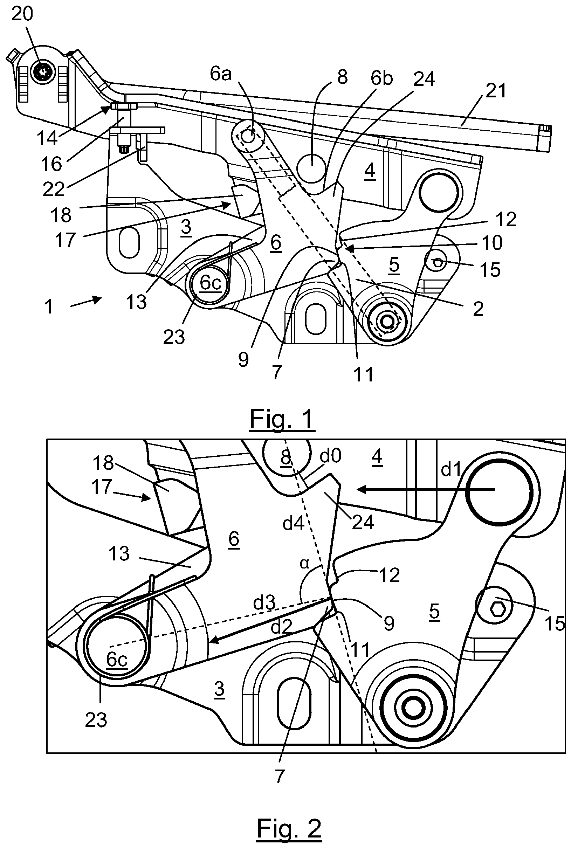

Figures 1 and 2 show a variant of the device 1 according to the invention in a retaining position, prior to the triggering of the pyrotechnic actuator 2 depicted by means of dotted lines in Figure 1, in which the displacement of the articulated attachment with the hood in a retreat direction is impeded.

The device 1 comprises a first fixed part 3 suitable for being firmly fixed to the chassis of the vehicle by means of screws or the like. Said first part 3 is attached by articulation through a first lever 5 to a second part 4 on which the hinge 20 of the hood 21 is assembled which, in the example depicted, consists of a single articulated attachment arranged or supported on the same second part 4.

In the retaining position and while the vehicle is being used, the second part 4 and the first part 3 from a block integral with the chassis of the vehicle, so when the user opens or closes the hood 21, it rotates about the articulated attachment of the hinge 20 formed integrally with the part 4.

Naturally, despite the fact that in the example depicted the hinge 20 is a simple hinge built into the second part 4 of the device 1, it is envisaged that other types of hinge could be used, for example doubly articulated hinges or hinges with four points of rotation, supported on the second the second movable part 4.

It is observed in Figures 1 and 2 that the device 1 is provided with a second lever 6 comprising a tooth 7, the upper part of which determines a retainer sector 9 on which a contact surface of the first lever 5 is applied. The second lever 6 is attached in an articulating manner to the first part 3 and is connected with the actuation rod of the actuating device 2, said connection being arranged between the fulcrum 6c and the resistance 6a of the second lever 6, formed by a pushing member 24 the function of which is explained below.

In the retaining position depicted in Figures 1 and 2, the rotational movement of the first lever 5 in the direction indicated by the arrow d1 is impeded by the effect of the second lever 6, whereas the rotation in the opposite direction is impeded by the stop 15. In the variant shown, the stop 15 is eccentric, so that the pressure exerted by the first lever 5 on the second lever 6 in the retaining position can be graduated, further being able to correct minor variations caused by tolerances while manufacturing the components of the device 1 and especially of the levers 5 and 6. Although the stop 15 allows said corrections, it would be possible to dispense with said stop 15 without this altering the proper working of the device 1.

Concerning the contour of the contact surface of the first lever 5 on the second lever 6, it is observed that it comprises a double step 10 determining two adjacent recesses 11 and 12, the first and lower one 11 of which receives the snap fitting of the tooth 7 of the second lever 6 when the device 1 adopts the retaining position, whereby the rotation of the first lever 5 is mechanically jammed by the second lever 6. Consequently, the hood 21 is retained in the retreat direction by the effect of the second lever 6.

As can be seen in Figure 2, in which the pyrotechnic actuator has been eliminated, the retainer sector 9 of the tooth 7 of the second lever 6 is configured such that the device 1 does not accidentally open. Indeed, in the event that the hood 21 receives a front impact, the force exerted on the hood would be transmitted through the hinge 20 and the second part 4 to the first lever 5, which in turn would apply a force on the second lever 6 by contact with the corresponding retainer sector 9. Nevertheless, since the tangent d4 of the retainer sector forms an angle α of 85° with the imaginary line d3 joining the fulcrum 6c of the second lever 6 with the effective point of contact of said retainer sector 9, the resultant force d2 exerted on the second lever 6 will urge it to rotate in the direction opposite the release direction of the first lever 5, which is not possible when the tooth 7 of the second lever 6 is housed in the recess 11 of the first lever 5.

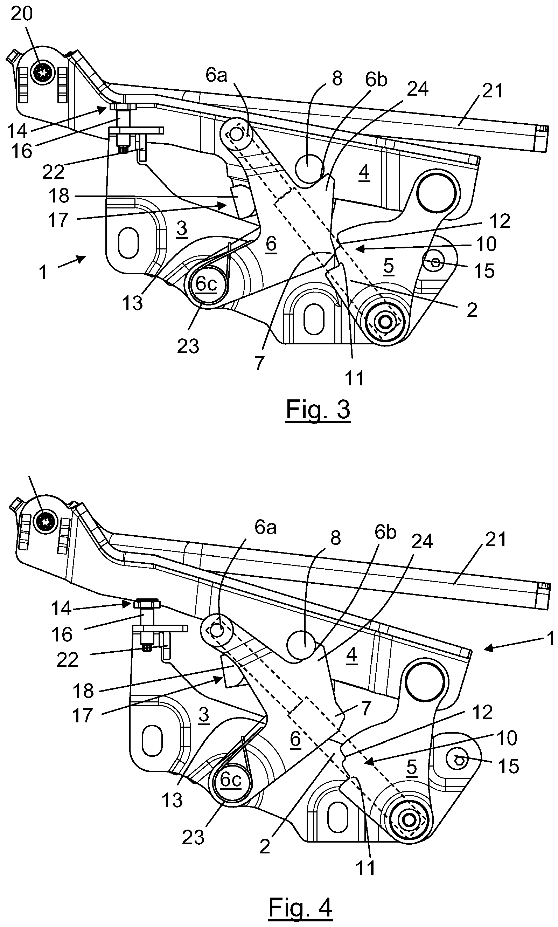

Starting from the retention situation depicted in Figures 1 and 2, if someone is hit, causing the triggering of the pyrotechnic actuator 2, the latter will displace the second lever 6, rotating it about its fulcrum 6c, causing, in a first actuation phase, the release of the tooth 7 of the second lever 6 from the recess 11 of the first lever 5 (see Figure 3), and in a second actuation phase, the displacement of the second part 4 (see Figure 4) by the pushing action exerted by the drive member 24 on the pin 8 provided for such purpose in said part 4. The displacement of the second part 4, and hence the displacement of the articulated attachment with the hood 21 in the retreat direction, is always guided by the second lever 5 and by a third lever 13, which aids in or contributes to the task of guiding the path that the displacement of the second part 4 follows.

It can be observed in Figures 1 and 2 that in the retaining position the pin 8 is separated a distance d0 from the pushing member 24 of the second lever 6, so that during the first actuation phase of said lever 6 the force transmitted by the pyrotechnic actuator 2 is used for releasing the tooth 7 from the recess 11.

For the purpose of regulating the force necessary for releasing said tooth 7 from the recess 11, for which it is necessary to elastically deform the first and second levers 5 and 6, the device 1 has pre-tensing means 14 of the retaining position which, in the variant shown, consist of a screw 16 screwed into the first part 3 which, when rotated towards a first rotational direction, exerts pressure against the second part 4, tensing the articulated parallelogram formed by the first and second parts 3 and 4 and the first and third levers 5 and 13, respectively. When the screw 16 exerts too much pressure on the second part 4, said elastic deformation can cause the inclination of the latter and, consequently, the screw 16 not being correctly applied against the surface thereof. To avoid this situation, it is envisaged that the second part 4 is provided with guiding means for the rod or head of the screw 16.

By means of this pre-tensing, it is further achieved that once the tooth 7 has been released from the recess 11, the tooth 7 cannot again be manually placed in the corresponding recess 11, such that the device 1 again adopts the retaining position depicted in Figures 1 and 2.

In another variant not depicted, the pre-tensing means can be formed by an eccentric cam which, when rotated, confers pressure to the second part 4. Naturally, other known mechanisms in the prior art can alternatively be used for tensing the articulated parallelogram formed by the first and second parts 3, 4 and the first and third levers 5, 13.

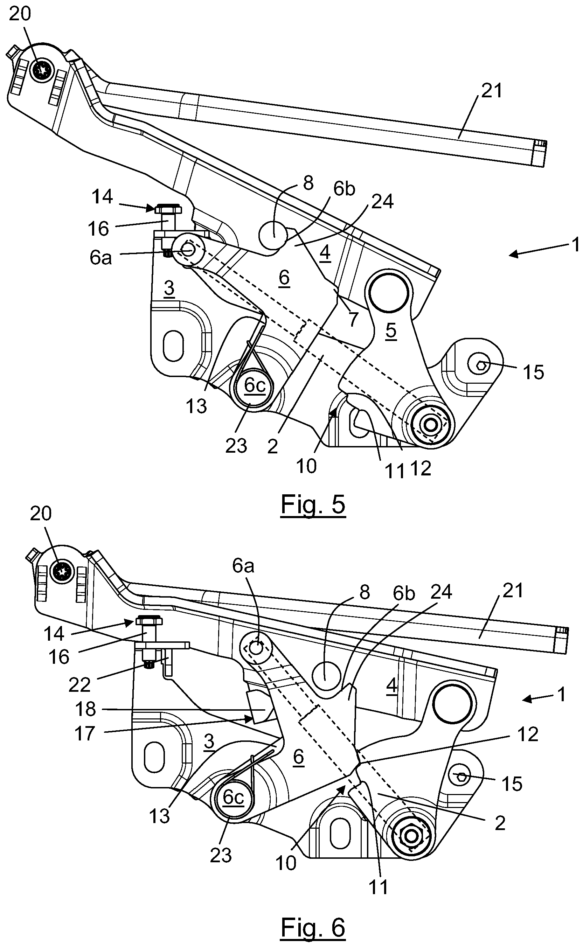

In the second actuation phase of the second lever 6, the second part 4 is displaced from its initial position until stop means 17 arranged in said second part 4 contact the extension 22 of the first part 3, at which time the device 1 adopts the position shown in Figure 5.

In the variant shown, the stop means 17 consist of a block 18 made of rubber, plastic or another material suitable for receiving the impact against the extension 22 and which is replaceable after wear. Other solutions would also be suitable, such as arranging the stop means 17 in the second lever 6, being able to be formed either by a block or by a protective coating of the second lever 6, and arranged in the position suitable for delimiting in a predetermined manner the course of the second part 4. It is also possible to dispense with the stop means 17 without affecting the working of the device 1, because the actuation of the second lever 6 could be limited only by the pyrotechnic actuator 2 when it reaches its maximum extension.

In any case, when the device 1 adopts the position shown in Figure 5, the hood 21 of the vehicle is in the preferred position for damping the impact of the pedestrian's head, it being necessary to perform the displacement sequence in the time space comprised between the detection of someone being hit and the impact of the pedestrian's head against the hood 21.

In the field of the present invention, it is also proposed that the devices, the purpose of which is to displace the rear part of the hood of the vehicle towards the windshield when it detects that someone has been hit, are provided with suitable means so that, after the triggering of the pyrotechnic actuator, the hood can be displaced manually until reaching a position in which it is firmly secured, preferably automatically, to the fixed parts of the device, i.e., to the chassis of the vehicle, said position being different from that which the hood adopted before the pyrotechnic actuator is triggered. The user can thus visually see that the hood is not in its initial position, despite the fact that its articulated attachment with the hinge is completely operative.

This feature allows the user to be able to drive the vehicle safely to the technical service point in order to replace the pyrotechnic actuator and restore the initial position of the device.

In the device 1 according to the invention, this proposal has been implemented by means of providing a second recess 12 in the first lever 5.

Indeed, starting from the situation depicted in Figure 5, after the activation of the pyrotechnic actuator 2, the second lever 6 is forced to rotate by the effect of the spring 23, arranged between the second lever 6 and the third lever 13, in the direction opposite to that of the actuation direction until again contacting with the first lever 5, so it is possible, by manually exerting force on the hood 21, to move the second part 4 in the direction opposite to the pushing direction of the pyrotechnic actuator 2 until the tooth 7 tightly fits into the second upper recess 12 of the double step 10 of the first lever 5, the device 1 adopting a provisional retaining position depicted in Figure 6. This provisional retaining position is conferred by the pre-tensing previously performed with the pre-tensing means 14, by means of which certain force must be exerted to insert the tooth 7 of the second lever 6 into the upper recess 12 of the first lever. This same force assures sufficient retention so that the hood 21 does not vibrate when the vehicle continues on its way.

To reset the device 1 in the technical service point, it is only necessary to remove tension from the device 1 by turning the screw 16 in the direction opposite to the pre-tensing direction, whereby the tooth 7 easily fits into the first recess 11, and after replacing the pyrotechnic actuator 2, pre-tensing the device 1 again by rotating the screw 16 in the pre-tensing direction until the configuration shown in Figure 1 is again adopted.

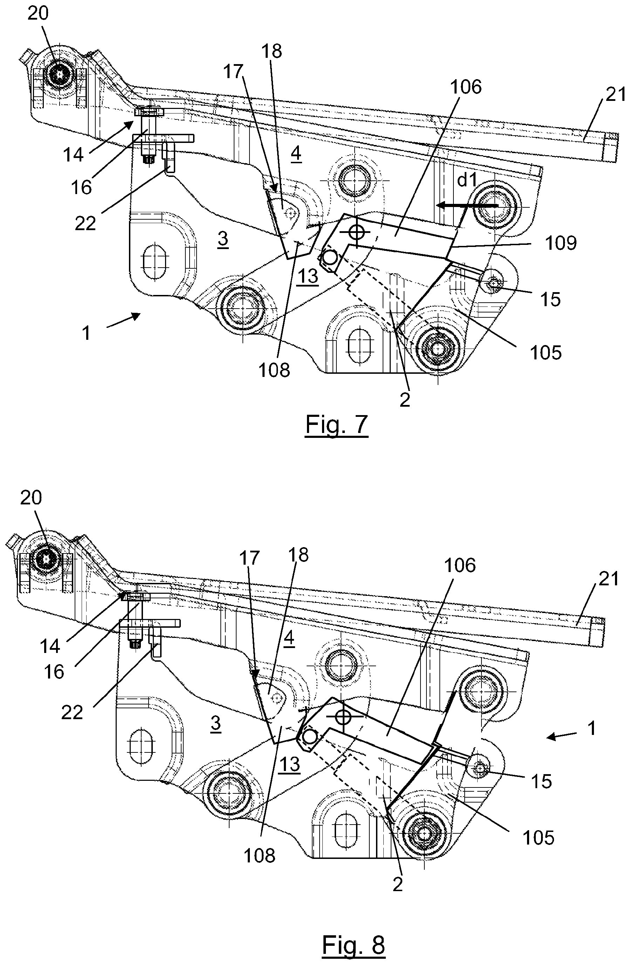

Figure 7 shows a second embodiment variant of the device 1 of the invention in a retaining position, prior to the triggering of the pyrotechnic actuator 2 depicted by means of dotted lines. In said second variant, the second lever 106 is L-shaped and is rotationally assembled about the third lever 13. Said second lever 106 is arranged so that it contacts with the first lever 105, determining a retainer sector 109 which, similarly to the first variant of the device 1 described, impedes its rotation in the direction of the arrow d1. During the first actuation phase, the pyrotechnic actuator 2, attached to the second lever 106, causes the rotation of said second lever 106 in clockwise direction until releasing the first lever 105, reaching the position shown in Figure 8, in which the device 1 is unblocked. During the second actuation phase, the second lever 106 exerts a pushing action on the pin 108, attached to the second part 4, causing the displacement of the second part 4 and, accordingly, of the articulated attachment with the hood.

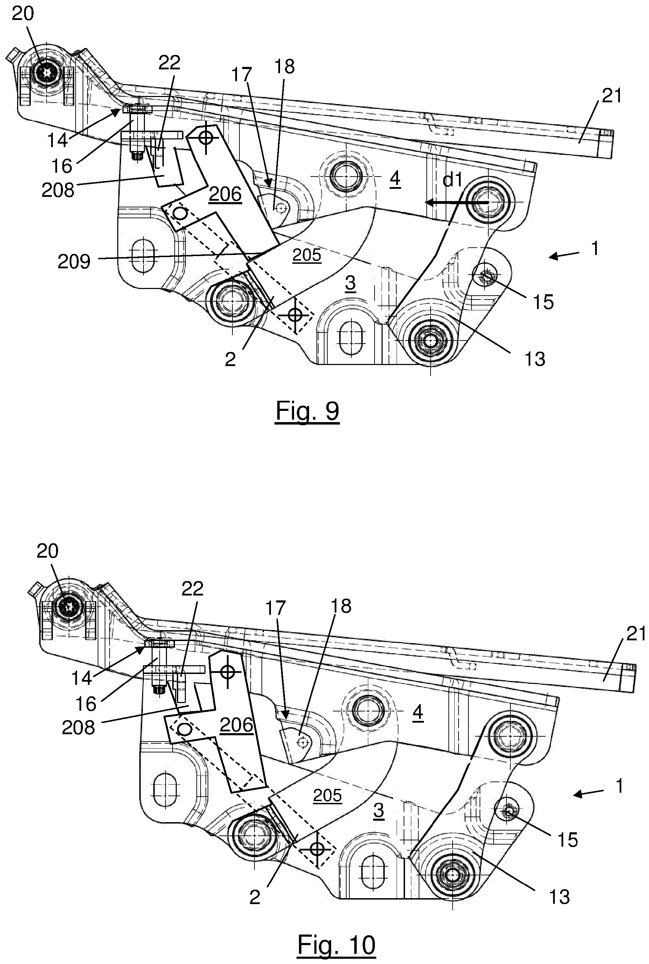

Figure 9 shows a third embodiment variant of the device 1, shown in the retaining position prior to the triggering of the pyrotechnic actuator 2. In said third variant, the second lever 206 is T-shaped and is rotationally assembled about the first part 3. In this variant, the second lever 206 is arranged so that it contacts with the first lever 205, determining a retainer sector 209 which impedes the rotation both of the first lever 205, and of the third lever 13 in the direction of the arrow d1. During the first actuation phase, the pyrotechnic actuator 2, attached to a branch of the 'T' of the second lever 206, as is shown in Figures 8 and 9, causes the rotation of the second lever 206 in clockwise direction until releasing the first lever 205, reaching the position shown in Figure 10, in which the device 1 is unblocked. During the second actuation phase, the second lever 206 exerts a pushing action on the pin 208, attached to the second part 4, causing the displacement of the second part 4 and, accordingly, of the articulated attachment with the hood.

## Claims

1. A device (1) for the displacement of an articulated attachment between a hinge (20) of a hood (21) of an automotive vehicle and said hood in the event of someone being hit, the device being of the type comprising a pyrotechnic actuator (2) configured to displacing, by pushing in a retreat direction when actuated, the part of the hinge supporting said articulated attachment, the device further comprising a first fixed part (3), configured to be firmly secured to the chassis of the vehicle, and a second movable part (4), configured for supporting a hinge of a hood or directly supporting the articulated attachment with said hood, both parts configured to be articulated to one another through a first lever (5, 105, 205), the device further comprising a second lever (6, 106, 206), rotational in relation to the first part (3), which is configured to adopt a retaining position in which it blocks the displacement of the articulated attachment with the hood in said retreat direction, the second lever being connected with the pyrotechnic actuator such that it is forced to rotate about its axis of rotation when said pyrotechnic actuator is actuated, so that in a first actuation phase, it unblocks the displacement of the articulated attachment and in a second actuation phase, exerts a pushing force on a movable component (108) of the device which is transmitted to the second movable part causing its displacement and hence the displacement of the articulated attachment with the hood in the retreat direction, guided by the first lever, the device being **characterized in that** it is configured in such a way that the displacement of the articulated attachment with the hood is blocked by contact of the first lever (5, 105, 205) with the second lever (6, 106, 206), when the latter adopts the retaining position.

2. The device (1) according to the preceding claim, **characterized in that** the mutual contact surfaces between the first lever (5, 105) and the second lever (6, 106) are suitably oriented so that in the retaining position, the rotational movement of the first lever in the direction transmitting the retreat movement (d1) to the articulated attachment with the hood (21), is mechanically jammed by the second lever, without the contribution of the pyrotechnic actuator (2) by means of its connection with the second lever to prevent the rotation of said second lever being necessary.

3. The device (1) according to the preceding claim, **characterized in that** the contact surface of the second lever (6) comprises a tooth (7) with a contour having a retainer sector (9) the tangent (d4) of which forms, in the rotational direction of the second lever, an angle (α) less than 100º with the imaginary line (d3) joining the fulcrum (6c) of said second lever with a point of the retainer sector on which the second lever is supported.

4. The device (1) according to the preceding claim, **characterized in that** the angle (α) is 90º.

5. The device (1) according to any one of the preceding claims, **characterized in that** the second part (4) comprises a pin (8), separated a distance (d0) from the resistance (6b) of the second lever (6) in the retaining position, suitable for receiving and transmitting the pushing action of said second lever during its second actuation phase to the second part (4).

6. The device (1) according to any one of the preceding claims, **characterized in that** the second lever (6) is a class three lever, in which the power (6a) formed by the connecting point with the pyrotechnic actuator (2) is located between the resistance (6b) and the fulcrum (6c), the resistance being the part of the second lever which displaces the second movable part (4) by pushing.

7. The device (1) according to any one of claims 1 to 6, **characterized in that** the contour of the contact surface of the first lever (5) comprises a double step (10) determining two adjacent recesses, the first recess (11) of which receives the snap fitting of the tooth (7) of the second lever in the initial retaining position of the device, while the second recess (12) is suitable for receiving by snapping the same tooth in a provisional retaining position which can be reached after the activation of the pyrotechnic actuator (2) when the first and second levers (5, 6) are manually displaced in the direction opposite to the actuation direction of the device in the event of someone being hit.

8. The device (1) according to any one of the preceding claims, **characterized in that** it comprises a third lever (13) which connects the first fixed part (3) with the second movable part (4) and which contributes in guiding the movement of the second movable part.

9. The device (1) according to any one of the preceding claims, **characterized in that** it comprises pre-tensing means (14) intended for being able to graduate in the retaining position the threshold value of the force necessary for releasing the tooth (7) of the second lever (6) from the first recess (11) of the first lever (5) by means of a variation in the elastic deformation of the components of the device connected with said first and second levers.

## Patentansprüche

1. Vorrichtung (1) für die Verstellung einer Gelenkverbindung zwischen einem Scharnier (20) einer Haube (21) eines Automobils und der genannten Haube im Fall dass jemanden geschlagen wird, wobei die Vorrichtung der Art umfassend einen pyrotechnischen Aktuator (2) ist, welcher dazu ausgebildet ist, den Teil des Scharniers, welcher die Gelenkverbindung stützt, zu verstellen, durch das Drücken in eine Rückzugsrichtung bei der Betätigung, wobei die Vorrichtung zusätzlich ein erstes festes Teil (3) umfasst, welches dazu ausgebildet ist, am Fahrgestell des Fahrzeugs fest befestigt zu werden, und ein zweites bewegliches Teil (4) umfasst, welches dazu ausgebildet ist, ein Scharnier einer Haube zu stützen oder die Gelenkverbindung mit der genannten Haube direkt zu stützen, wobei beide Teile dazu ausgebildet sind, miteinander über einen ersten Hebel (5, 105, 205) gelenkig verbunden zu werden, wobei die Vorrichtung zusätzlich einen zweiten Hebel (6, 106, 206) umfasst, drehbar in Bezug auf das erste Teil (3), welcher dazu ausgebildet ist, eine Rückhalteposition anzunehmen, in welcher er die Verstellung der Gelenkverbindung mit der Haube in die genannten Rückzugsrichtung sperrt, wobei der zweite Hebel mit dem pyrotechnischen Aktuator verbunden ist, so dass er gezwungen wird sich um seine Drehachse zu drehen, wenn der genannte pyrotechnische Aktuator betätigt wird, so dass er in einer ersten Betätigungsphase die Verstellung der Gelenkverbindung entsperrt und in einer zweiten Betätigungsphase eine Druckkraft auf einen beweglichen Bestandteil (108) der Vorrichtung ausübt, welche zum zweiten beweglichen Teil übertragen wird, so dass die Verstellung desselben verursacht wird und somit die Verstellung der Gelenkverbindung mit der Haube in die Rückzugsrichtung, vom ersten Hebel geführt, wobei die Vorrichtung **dadurch gekennzeichnet ist, dass** sie derart ausgebildet ist, dass die Verstellung der Gelenkverbindung mit der Haube mittels des Kontakts des ersten Hebels (5, 105, 205) mit dem zweiten Hebel (6, 106, 206) gesperrt wird, wenn der Letztere die Rückhalteposition einnimmt.

2. Vorrichtung (1) nach dem vorhergehenden Anspruch, **dadurch gekennzeichnet, dass** die gegenseitigen Kontaktflächen zwischen dem ersten Hebel (5, 105) und dem zweiten Hebel (6, 106) geeignet orientiert sind, so dass in der Rückhalteposition, die Drehbewegung des ersten Hebels in die Richtung, welche die Rückzugsbewegung (d1) zur Gelenkverbindung mit der Haube (21) überträgt, vom zweiten Hebel mechanisch blockiert wird, ohne dass der Beitrag des pyrotechnischen Aktuators (2) mittels dessen Verbindung mit dem zweiten Hebel nötig ist, um die Drehung des genannten zweiten Hebels zu verhindern.

3. Vorrichtung (1) nach dem vorhergehenden Anspruch, **dadurch gekennzeichnet, dass** die Kontaktfläche des zweiten Hebels (6) einen Zahn (7) mit einer Kontur umfasst, welche einen Rückhaltebereich (9) aufweist, dessen Tangente (d4) in die Drehrichtung des zweiten Hebels einen Winkel (α) kleiner als 100° mit der gedachten Linie (d3) bildet, unter Zusammenfügung des Hebelpunkts (6c) des genannten zweiten Hebels mit einem Punkt des Rückhaltebereichs, auf welchem der zweite Hebel gestützt ist.

4. Vorrichtung (1) nach dem vorhergehenden Anspruch, **dadurch gekennzeichnet, dass** der Winkel (α) 90° ist.

5. Vorrichtung (1) nach einem der vorhergehenden Ansprüche, **dadurch gekennzeichnet, dass** das zweite Teil (4) einen Stift (8) umfasst, welcher mit einem Abstand (d0) vom Widerstandselement (6b) des zweiten Hebels (6) in der Rückhalteposition getrennt ist, und welcher dazu geeignet ist, die Drückeinwirkung des genannten zweiten Hebels zu empfangen und sie während deren zweiten Betätigungsphase zum zweiten Teil (4) zu übertragen.

6. Vorrichtung (1) nach einem der vorhergehenden Ansprüche, **dadurch gekennzeichnet, dass** der zweite Hebel (6) ein Hebel dritter Klasse ist, in welchem sich die durch den Verbindungspunkt mit dem pyrotechnischen Aktuator (2) erzeugte Kraft (6a) zwischen dem Widerstandselement (6b) und dem Hebelpunkt (6c) befindet, wobei das Widerstandselement Teil des zweiten Hebels ist, welcher das zweite beweglich Teil (4) mittels des Drückens verstellt.

7. Vorrichtung (1) nach einem der Ansprüche 1 bis 6, **dadurch gekennzeichnet, dass** die Kontur der Kontaktfläche des ersten Hebels (5) eine doppelte Stufe (10) umfasst, welche zwei benachbarte Ausnehmungen bestimmt, deren erste Ausnehmung (11) die Schnappkupplung des Zahns (7) des zweiten Hebels in der anfänglichen Rückhalteposition der Vorrichtung aufnimmt, während die zweite Ausnehmung (12) zur Aufnahme geeignet ist, mittels des Schnappens des gleichen Zahns in einer vorläufigen Rückhalteposition, welche nach der Aktivierung des pyrotechnischen Aktuators (2) erreicht werden kann, wenn der erste Hebel (5) und der zweite Hebel (6) in die der Betätigungsrichtung der Vorrichtung entgegengesetzte Richtung manuell verstellt werden, im Fall dass jemanden geschlagen wird.

8. Vorrichtung (1) nach einem der vorhergehenden Ansprüche, **dadurch gekennzeichnet, dass** sie einen dritten Hebel (13) umfasst, welcher das erste fixierte Teil (3) mit dem zweiten beweglichen Teil (4) verbindet und welcher zur Führung der Bewegung des zweiten beweglichen Teils beiträgt.

9. Vorrichtung (1) nach einem der vorhergehenden Ansprüche, **dadurch gekennzeichnet, dass** sie Vorspannmittel (14) umfasst, welche dazu bestimmt sind, in der Rückhalteposition den Schwellenwert der für das Freigeben des Zahns (7) des zweiten Hebels (6) aus der ersten Ausnehmung (11) des ersten Hebels (5) nötigen Kraft abstufen zu können, mittels einer Änderung bei der elastischen Verformung der Bestandteile der Vorrichtung, welche mit dem genannten ersten Hebel und dem genannten zweiten Hebel verbunden sind.

## Revendications

1. Dispositif (1) pour le déplacement d'un attelage articulé entre une charnière (20) d'un capot (21) d'un véhicule automobile et ledit capot au cas où une personne serait frappée, le dispositif étant du type comprenant un actionneur pyrotechnique (2) configuré pour déplacer, en poussant dans une direction de retrait lorsqu'il est actionné, la partie de la charnière supportant ledit attelage articulé, le dispositif comprenant en outre une première partie fixe (3), configurée pour être assurée fermement au châssis du véhicule, et une deuxième partie mobile (4) configurée pour supporter une charnière d'un capot ou supporter directement l'attelage articulé avec ledit capot, les deux parties étant configurées pour être articulées l'une par rapport de l'autre à travers un premier levier (5, 105, 205), le dispositif comprenant en outre un deuxième levier (6, 106, 206), rotatif par rapport à la première partie (3), qui est configuré pour adopter une position de retenue dans laquelle il bloque le déplacement de l'attelage articulé avec le capot dans ladite position de retrait, le deuxième levier étant relié à l'actionneur pyrotechnique de manière qu'il est forcé à tourner autour de son axe de rotation lorsque ledit actionneur pyrotechnique est actionné, de manière que dans une première phase d'action, il débloque le déplacement de l'attelage articulé et, dans une deuxième phase d'action, il exerce une force de poussée sur un composant mobile (108) du dispositif qui est transmise à la deuxième partie mobile en provoquant son déplacement et de la sorte le déplacement de l'attelage articulé au capot dans la position de retrait, guidé par le premier levier, le dispositif étant **caractérisé en ce qu'**il est configuré de manière que le déplacement de l'attelage articulé avec le capot est bloqué par contact du premier levier (5, 105, 205) avec le deuxième levier (6, 106, 206), lorsque ce dernier adopte la position de retenue.

2. Dispositif (1) selon la revendication précédente, **caractérisé en ce que** les surfaces de contact mutuel entre le premier levier (5, 105) et le deuxième levier (6, 106) sont orientées de manière appropriée de manière que, dans la position de retenue, le mouvement de rotation du premier levier dans la direction qui transmet le mouvement de retrait (d1) vers l'attelage articulé avec le capot (21), est mécaniquement coincé par le deuxième levier, sans que la contribution de l'actionneur pyrotechnique (2) par sa connexion avec le deuxième levier pour éviter la rotation dudit deuxième levier ne soit nécessaire.

3. Dispositif (1) selon la revendication précédente, **caractérisé en ce que** la surface de contact du deuxième levier (6) comprend une dent (7) avec un contour ayant un secteur de retenue (9) dont la tangente (d4) forme, dans la direction de rotation du deuxième levier, un angle (α) inférieur à 100° avec la ligne imaginaire (d3) reliant le pivot (6c) dudit deuxième levier avec un point du secteur de retenue sur lequel est supporté le deuxième levier.

4. Dispositif (1) selon la revendication précédente, **caractérisé en ce que** l'angle (α) est de 90°.

5. Dispositif (1) selon l'une quelconque des revendications précédentes, **caractérisé en ce que** la deuxième partie (4) comprend une broche (8), séparée d'une distance (d0) de la résistance (6b) du deuxième levier (6) dans la position de retenue, appropriée pour recevoir et transmettre l'action de poussée dudit deuxième levier pendant sa deuxième phase d'action à la deuxième partie (4).

6. Dispositif (1) selon l'une quelconque des revendications précédentes, **caractérisé en ce que** le deuxième levier (6) est un levier de classe trois, dans lequel la puissance (6a) formée par le point de connexion avec l'actionneur pyrotechnique (2) est situé entre la résistance (6b) et le pivot (6c), la résistance étant la partie du deuxième levier qui déplace la deuxième partie mobile (4) en poussant.

7. Dispositif (1) selon l'une quelconque des revendications 1 à 6, **caractérisé en ce que** le contour de la surface de contact du premier levier (5) comprend une double marche (10) déterminant deux évidemment attenants, le premier évidemment (11) des deux reçoit l'encliquetage de la dent (7) du deuxième levier dans la position de retenue initiale du dispositif, tandis que le deuxième évidemment (12) est approprié pour recevoir par encliquetage la même dent dans une position de retenue provisoire qui peut être atteinte après l'activation de l'actionneur pyrotechnique (2) lorsque le premier et le deuxième leviers (5, 6) sont déplacés manuellement dans la direction opposée à la direction d'action du dispositif au cas où une personne serait frappée.

8. Dispositif (1) selon l'une quelconque des revendications précédentes, **caractérisé en ce qu'**il comprend un troisième levier (13) qui relie la première partie fixe (3) à la deuxième partie mobile (4) et qui contribue au guidage du mouvement de la deuxième partie mobile.

9. Dispositif (1) selon l'une quelconque des revendications précédentes, **caractérisé en ce qu'**il comprend des moyens de tension préalable (14) destinés à être aptes à graduer dans la position de retenue la valeur de seuil de la force nécessaire pour libérer la dent (7) du deuxième levier (6) du premier évidemment (11) du premier levier (5) par le biais d'une variation dans la déformation élastique des composants du dispositif relié auxdits premier et deuxième leviers.
